# EUROPÄISCHE PATENTSCHRIFT

(11) **EP 3 279 035 B1**
(45) Veröffentlichungstag und Bekanntmachung des Hinweises auf die Patenterteilung: **08.06.2022**
(21) Anmeldenummer: 17182019.4
(22) Anmeldetag: 19.07.2017
(51) Int. Cl.: B60Q 1/115

(54) **SCHEINWERFER FÜR FAHRZEUGE**
HEADLAMP FOR VEHICLES
PHARE DE VÉHICULE

(30) Priorität: 02.08.2016 DE 102016114258
(43) Veröffentlichungstag der Anmeldung: 07.02.2018
(73) Patentinhaber: HELLA GmbH & Co. KGaA, 59552 Lippstadt (DE)
(72) Erfinder: Aichinger-Rosenberger, Michael, 3620 Spitz an der Donau (AT); Pfingstl, Rainer, 7551 Stegersbach (AT); Schantl, Stefan, 8251 Bruck an der Lafnitz (AT)
(74) Vertreter: Ostermann, Thomas

(56) Entgegenhaltungen:
- DE-A1-102005 043 058
- DE-A1-102007 025 337
- DE-A1-102008 036 193
- DE-A1-102008 044 676
- DE-U1-202012 004 965
- US-A1- 2004 223 338
- US-A1- 2011 235 356

## Beschreibung

Die Erfindung betrifft einen Scheinwerfer für Fahrzeuge nach dem Oberbegriff des Patentanspruchs 1.

Aus der DE 196 48 180 A1 ist ein Scheinwerfer für Zweiradfahrzeuge bekannt, der über ein Abblendlichtmodul mit einer Lichtquelle sowie einer Optikeinheit zum Erzeugen einer Abblendlichtverteilung verfügt. In einer Normallage des Abblendlichtmoduls bzw. des Zweiradfahrzeuges während der Fahrt befindet sich eine Hell-/Dunkelgrenze der Abblendlichtverteilung in einer vorgegebenen Höhe. Es wird hierbei davon ausgegangen, dass die Abblendlichtverteilung des Zweiradfahrzeugs an eine Messwand projiziert wird. Muss der Fahrer jedoch ein Bremsmanöver durchführen, wirken Verzögerungskräfte auf das Abblendlichtmodul, so dass die Hell-/Dunkelgrenze der Abblendlichtverteilung in dieser Nichtnormallage eine geringere Höhe aufweist als in der Normallage. Der Scheinwerfer weist somit eine Neigungsstellung nach unten bezüglich einer quer zu einer Hauptabstrahlrichtung desselben verlaufenden horizontalen Achse auf. Zur Vermeidung einer damit verbundenen geringeren Leuchtweite in der Nichtnormallage des Scheinwerfers wird von der DE 196 48 180 A1 vorgeschlagen, das Gehäuse des Scheinwerfers oder die als Reflektor ausgebildete Optikeinheit schwenkbar auszubilden, so dass der Scheinwerfer bzw. der Reflektor in der Nichtnormallage hochgeschwenkt wird. Der Scheinwerfer bzw. Reflektor ist zwischen zwei Anschlägen schwenkbar gelagert, so dass mit Betätigung eines Handbremshebels der Scheinwerfer bzw. der Reflektor in die Ausgleichsposition gebracht werden kann. Nachteilig an dem bekannten Scheinwerfer ist, dass der Ausgleich der Neigungsverstellung des Scheinwerfers in der Nichtnormallage relativ langsam und nur in einer Stufe erfolgen kann. Unterschiedlich starke Bremsvorgänge können somit nicht ausgeglichen werden.

Aus der DE 10 2008 044 676 A1 ist ein Scheinwerfer für Fahrzeuge bekannt, der als Lichtquelle ring- oder kreisförmig angeordnete Leuchtdioden aufweist. Mehrere Leuchtdioden sind zu einem Leuchtsegment zusammengefasst. Zum Ausgleich von Nickbewegungen werden mittels eines Steuergerätes solche Leuchtdioden-Segmente angesteuert, dass die gewünschte Lichtverteilung beibehalten werden kann.

Aus der DE 10 2005 043 058 A1 ist ein Scheinwerfer für Fahrzeuge bekannt, der eine Mehrzahl von Lichtquellen zur Erzeugung einer vorgegebenen Lichtverteilung aufweist. Die Lichtquellen sind rechteckförmig auf einer gemeinsamen Trägerplatte angeordnet. Den Lichtquellen ist ein Reflektor als Optikeinheit zugeordnet. Für den Fall, dass der Scheinwerfer infolge eines Beschleunigens oder Verzögerns um einen Nickwinkel verschwenkt wird, erfolgt die Ansteuerung eines solchen Teils der auf dem Rechteckfeld angeordneten Lichtquellen, dass die vorgegebene Basislichtverteilung erzeugt wird. In Abhängigkeit von einem mittels eines Neigungssensors detektierten Neigungswinkel des Fahrzeugs wird eine Anzahl von Lichtquellen zu- oder abgeschaltet. Ein weiterer Scheinwerfer ist aus der US 2004/223338 A1 bekannt. Aufgabe der vorliegenden Erfindung ist es daher, einen Scheinwerfer für Fahrzeuge sowie eine Verstellvorrichtung anzugeben, dass auf einfache und effektive Weise ein Ausgleich bei Neigung (Nickbewegung) des Scheinwerfers während der Fahrt des Fahrzeugs, insbesondere in einer Bremssituation des Fahrzeugs, geschaffen wird.

Zur Lösung dieser Aufgabe weist die Erfindung die Merkmale des Patentanspruchs 1 auf.

Nach der Erfindung ist als Ausgleichsmittel für einen geänderte Neigungsstellung (Nickstellung) des Scheinwerfers bezüglich einer quer zur Hauptabstrahlrichtung des Scheinwerfers verlaufenden horizontalen Achse lediglich mindestens eine Zusatzlichtquelle sowie gegebenenfalls eine derselben zugeordnetes optisches Lichtführungsmittel vorgesehen. Sobald die Nichtnormallage, also die geänderte Neigungsstellung, erkannt worden ist, ist diese Zusatzlichtquelle zuschaltbar und ermöglicht in Verbindung mit dem optischen Lichtführungsmittel eine Zusatzlichtverteilung mit einer Zusatz-Hell-/Dunkelgrenze, die in der gleichen Höhe angeordnet ist wie eine Basis-Hell-/Dunkelgrenze einer Basislichtverteilung in der Normallage des Scheinwerfers, wobei die Basislichtverteilung durch die Lichtquelle und die Optikeinheit erzeugt wird. Durch Einschalten der Zusatzlichtquelle wird somit ein Zwischenraum ausgeleuchtet zwischen einer Soll-Hell-/Dunkelgrenze, die bezogen auf eine Messwand sowohl in der Normallage und als in der Nichtnormallage des Scheinwerfers in der gleichen Höhe verläuft und mit der Hell-/Dunkelgrenze einer Basislichtver-teilung übereinstimmt, die in der Normallage des Scheinwerfers erzeugt wird, und einer Hell-/Dunkelgrenze der Basislichtverteilung in der Nichtnormallage. Bei einem Bremsvorgang eines als Motorrad ausgebildeten Fahrzeugs würde sich die Leuchtweite während des Bremsvorganges verringern. Durch lediglich Zuschalten der Zusatzlichtquelle kann somit relativ schnell eine kürzere Ist-Leuchtweite einer vorgegebenen Soll-Leuchtweite in der Normallage angenähert werden. In der Nichtnormallage des Scheinwerfers weist damit der Scheinwerfer die gewünschte Leuchtweite auf. Vorteilhaft kann dieser Ausgleich ohne Bewegung eines Bauteils erfolgen, so dass keine Trägheitskräfte zu überwinden sind. Nach der Erfindung sind die mehrere Zusatzlichtquellen in Verbindung mit Lichtführungsmitteln als Ausgleichmittel vorgesehen, so dass ein Neigungs- bzw. Nickausgleich des Scheinwerfers in mehreren Stufen erfolgen kann. Vorteilhaft kann somit ein effektiver Nickausgleich geschaffen werden, der abhängig ist von der aktuellen Neigungsstellung des Scheinwerfers. Mit steigender Anzahl der Verstellstufen wird der Zwischenraum zwischen der Leuchtweite in der Normallage und der aufgeschalteten Leuchtweite bzw. der Zwischenraum zwischen der Hell-/Dunkelgrenze einer Basisleucht-verteilung und einer Hell-/Dunkelgrenze der Zusatzlichtverteilung kleiner. Hierdurch ist der gleichwohl infolge der Stufenverstellung sich einstellender Leuchtweitensprung für den Fahrer weniger wahrnehmbar. Bei einer relativ hohen Anzahl von Zusatzlichtquellen kann quasi ein kontinuierliches Nachführen der Leuchtweite bzw. der Höhe der Hell-/Dunkelgrenze bereitgestellt werden. Da jede Zusatzlichtquelle eine unterschiedliche Höhe der Hell-/Dunkelgrenze der Abblendlichtverteilung bewirkt, kann durch sequenzielles Zuschalten der Zusatzlichtquellen nach und nach eine relativ große Neigungswinkeländerung ausgeglichen werden. Nach der Erfindung ist die mindestens eine Zusatzlichtquelle sowie die Basislichtquelle um einen Defokussierweg versetzt zueinander angeordnet, wobei diesen Lichtquellen als Optikeinheit derselbe Reflektor zugeordnet ist. Bezüglich des von der Zusatzlichtquelle abgestrahlten Lichtes wirkt der Reflektor defokussierend. Vorteilhaft können hier auf einfache Weise unterschiedliche Hell-/Dunkelgrenzen von verschiedenen Lichtverteilungen erzeugt werden.

Nach der Erfindung sind mindestens drei Zusatzlichtquellen vorgesehen, um einen Ausgleich zu schaffen zwischen einer Normallage und einer maximalen Nichtnormallage. Bei dem Bremsvorgang des Zweirades kann somit ein maximaler Neigungswinkelbereich in drei Differenzneigungswinkel aufgeteilt werden. Vorzugsweise sind die Differenzneigungswinkel gleich ausgebildet, so dass ein gleichmäßiger Neigungsausgleich gegeben ist.

Nach der Erfindung sind die Zusatzlichtquellen zusammen mit den eigentlichen Lichtquellen, die zur Erzeugung der Abblendlichtverteilung in der Normallage des Scheinwerfers dienen, in einem Abblendlichtmodul angeordnet. Den Zusatzlichtquellen sind dieselben Lichtführungsmittel zugeordnet wie den eigentlichen Lichtquellen. Auf diese Weise kann der Ausgleich für die Neigungsverstellung des Scheinwerfers platzsparend bereitgestellt werden.

Nach der Erfindung wird mittels eines Neigungssignals die aktuelle Lage des Scheinwerfers relativ zu einer zur Hauptabstrahlrichtung quer verlaufenden horizontalen Achse ermittelt und einer Steuereinheit zugeführt, mittels derer die Lichtquelle bzw. Zusatzlichtquelle angesteuert wird. Das Zuschalten der Zusatzlichtquellen kann somit schnell in Abhängigkeit von der aktuellen Neigungsstellung des Scheinwerfers erfolgen.

Weitere Vorteile der Erfindung ergeben sich aus den weiteren Unteransprüchen.

Ein Ausführungsbeispiel der Erfindung wird nachfolgend anhand der Zeichnungen näher erläutert:

Es zeigen:
- Fig. 1: eine Vorderansicht eines Motorradvorderteils mit einem Scheinwerfer,
- Fig. 2: eine Seitenansicht des Motorradvorderteils mit eingezeichneten Lichtstrahlen,
- Fig. 3: eine vergrößerte Seitenansicht des Scheinwerfers mit einer Mehrzahl von Lichtquellen und einem Reflektor als Optikeinheit,
- Fig. 4: eine Basislichtverteilung in einer Normallage des Scheinwerfers,
- Fig. 5a: eine Darstellung der Basislichtverteilung in einer ersten Nichtnormallage des Scheinwerfers,
- Fig. 5b: eine aus der Basislichtverteilung und einer ersten Zusatzlichtverteilung zusammengesetzten ersten Gesamtlichtverteilung in der ersten Nichtnormallage,
- Fig. 6a: eine Darstellung der Basislichtverteilung in einer zweiten Nichtnormallage,
- Fig. 6b: eine Darstellung einer aus der Basislichtverteilung gemäß Figur 6a, der ersten Zusatzlichtverteilung und einer zweiten Zusatzlichtverteilung zusammengesetzten zweiten Gesamtlichtverteilung in der zweiten Nichtnormallage,
- Fig. 7a: eine Darstellung der Basislichtverteilung in einer dritten Nichtnormallage und
- Fig. 7b: eine Darstellung einer aus der Basislichtverteilung gemäß Figur 7a, der ersten Zusatzlichtverteilung, der zweiten Zusatzlichtverteilung und einer dritten Zusatzlichtverteilung zusammengesetzten Gesamtlichtverteilung in der dritten Nichtnormallage.

Ein erfindungsgemäßer Scheinwerfer für Fahrzeuge wird vorzugsweise für Zweiradfahrzeuge (Motorräder) eingesetzt.

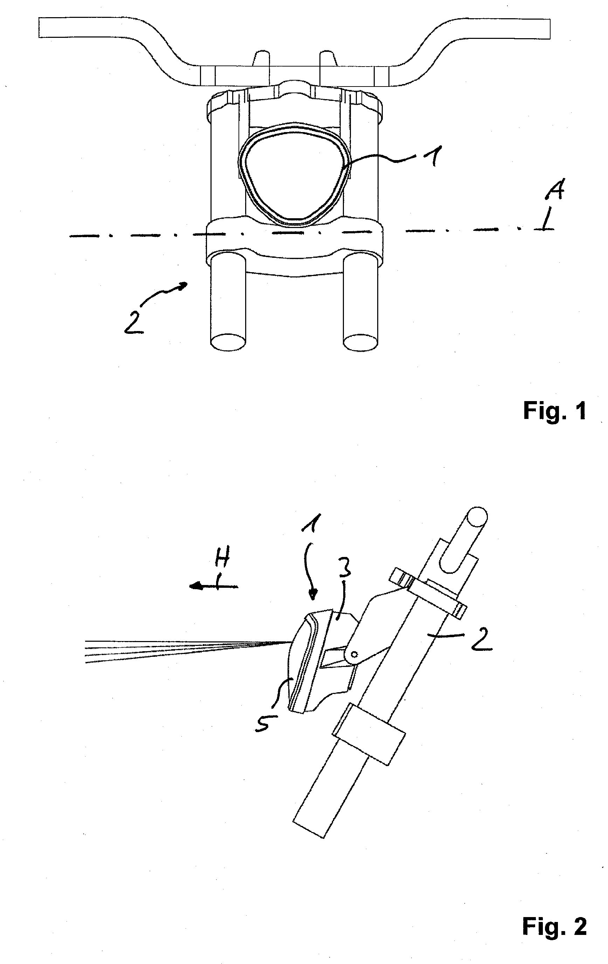

Wie aus den Figuren 1 und 2 ersichtlich ist, ist ein Scheinwerfer an einem Motorradvorderteil bzw. einer Gabeleinrichtung 2 des Motorrades befestigt. Der Scheinwerfer 1 weist ein Gehäuse 3 auf, in dem ein Abblendlicht-Leuchtmodul 4 zum Erzeugen einer Abblendlichtverteilung angeordnet ist. Das Gehäuse 3 ist topfförmig ausgebildet. Eine in Hauptabstrahlrichtung H des Scheinwerfers 1 vorne angeordnete Öffnung des Gehäuses 3 ist durch eine vorzugsweise glasklar ausgebildete Abschlussscheibe 5 abgedeckt. Das Gehäuse 3 ist über Befestigungsmittel fest mit der Gabeleinrichtung 2 verbunden.

Das Abblendlicht-Leuchtmodul 4 weist im Wesentlichen eine Anzahl von Lichtquellen und als Optikeinheit einen Reflektor 8 auf. Die Lichtquellen sind vorzugsweise als LED-Lichtquellen, insbesondere als LED-Chips ausgebildet.

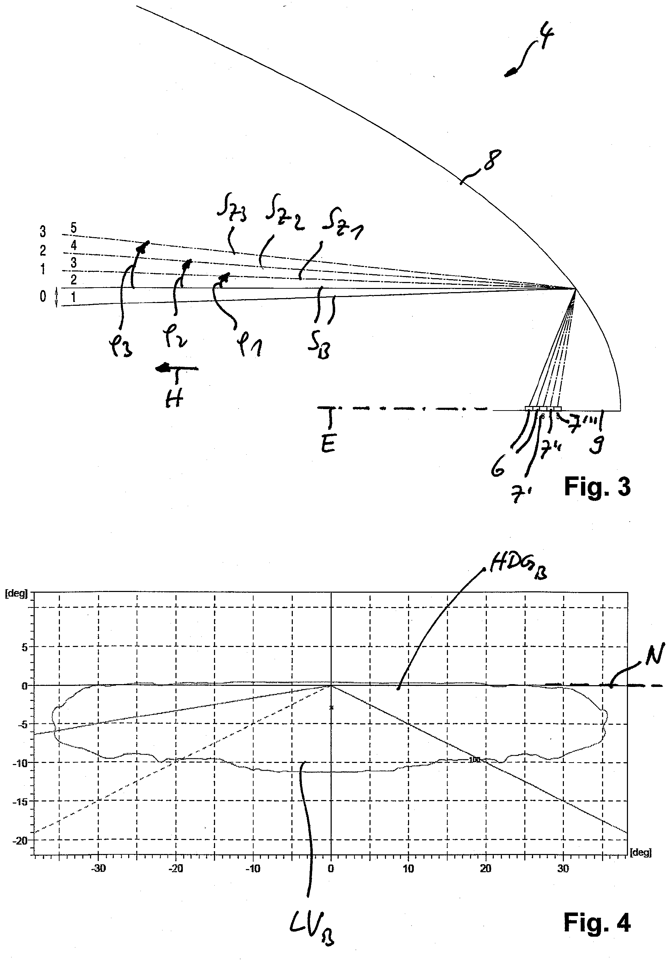

Im vorliegenden Ausführungsbeispiel sind zwei Basislichtquellen 6 vorgesehen, die in einem Fokussierbereich des Reflektors 8 angeordnet sind und in Verbindung mit dem Reflektor 8 zur Erzeugung einer Basislichtverteilung LV_{B} dienen, siehe Figur 4. Diese Basislichtquellen 6 sind in einer Normallage des Scheinwerfers 1, in der sich das Motorrad in einem nicht gebremsten Zustand befindet, eingeschaltet. Die hierbei erzeugte Lichtverteilung LV_{B} weist eine Hell-/Dunkelgrenze HDG_{B} auf, die einer vorgegebenen Normalposition N für eine gesetzlich vorgegebene Abblendlichtverteilung entspricht. Im vorliegenden Ausführungsbeispiel sind zwei Basislichtquellen 6 zur Erzeugung der Abblendlichtverteilung LV_{B} in der Normallage des Scheinwerfers 1 eingeschaltet.

Die dem Reflektor 8 zugeordneten Basislichtquellen 6 sind auf einem gemeinsamen Träger 9 angeordnet und befinden sich in einem brennpunktnahen Bereich des vorzugsweise parabelförmig ausgebildeten Reflektors 8. Der Träger 9 erstreckt sich in einer horizontalen Ebene E. Hierbei wird das von den Basislichtquellen 6 ausgesandte Licht 15 an einer Fläche des Reflektors 8 in Richtung der Hauptabstrahlrichtung H umgelenkt.

Ferner sind Zusatzlichtquellen 7′, 7ʺ, 7‴ vorgesehen, die mit demselben Reflektor 8 als Lichtführungsmittel zusammenwirken, so dass mehrere Zusatzlichtverteilungen erzeugt werden, die mit der Basislichtverteilung LV_{B} überlagerbar sind. Die Zusatzlichtquellen 7′, 7ʺ, 7‴ sind nicht - wie die Basislichtquellen 6 - in einem Fokussierbereich des Reflektors 8 angeordnet, sondern in einem Defokussierbereich des Reflektors 8. Eine erste Zusatzlichtquelle 7′ ist um einen ersten Defokussierweg horizontal versetzt zu den Basislichtquellen 6 angeordnet. Eine zweite Zusatzlichtquelle 7ʺ ist um einen gleichen Defokussierweg horizontal versetzt zu der ersten Zusatzlichtquelle 7' angeordnet. Eine dritte Zusatzlichtquelle 7‴ ist um einen gleichen Defokussierweg versetzt zu der zweiten Zusatzlichtquelle 7" angeordnet. Die Zusatzlichtquellen 7′, 7ʺ, 7‴ sind in einer gleichen Richtung versetzt zu der mindestens einen Basislichtquelle 6 angeordnet, im vorliegenden Fall entgegen der Hauptabstrahlrichtung H.

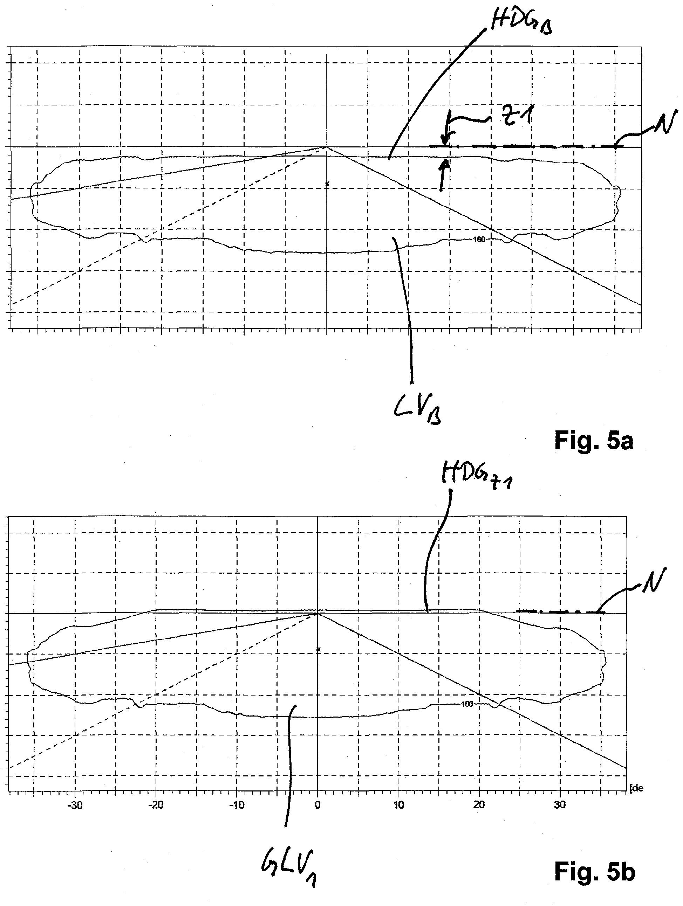

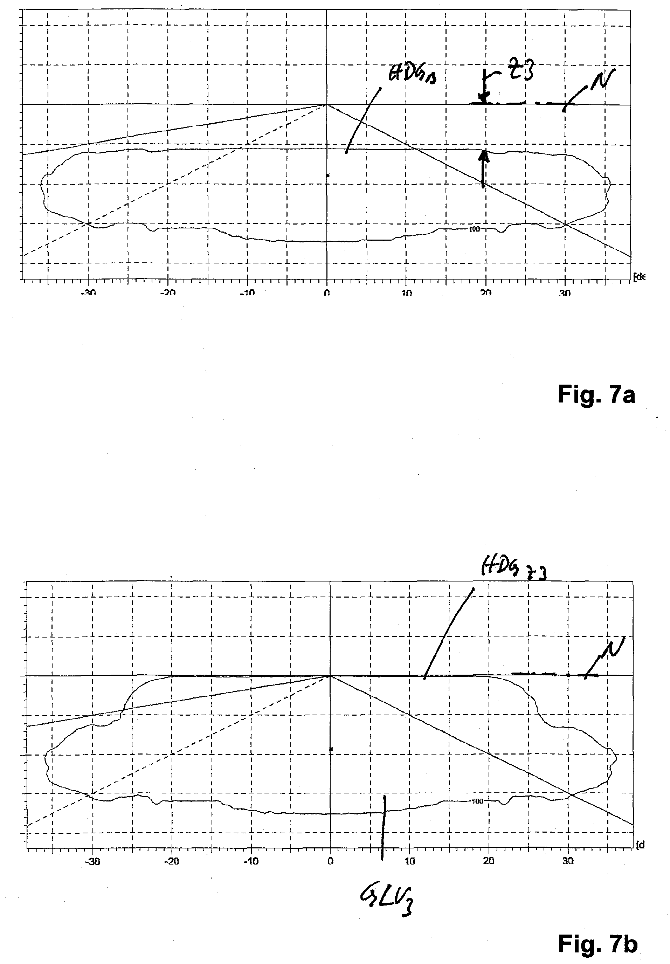

Wie aus Figur 5a bis 7b ersichtlich ist, bewirken die unterschiedlich versetzt zu den Basislichtquellen 6 angeordneten Zusatzlichtquellen 7′, 7ʺ, 7‴, dass Zusatzlichtverteilungen mit unterschiedlichen Hell-/Dunkelgrenzen HDG_{Z1}, HDG_{Z2}, HDG_{Z3} erzeugt werden.

Die Zusatzlichtquellen 7′, 7ʺ, 7‴ werden in Abhängigkeit von einer aktuellen Neigungsstellung des Scheinwerfers 1, welche durch ein Neigungssignal detektiert wird, zugeschaltet, d. h. zusätzlich zu den Basislichtquellen 6 einge-schaltet. Das Neigungssignal wird durch einen Neigungssensor bereitgestellt, der eine Neigungsverstellung der Gabeleinrichtung 2 bzw. des Scheinwerfers 1 detektiert und einer nicht dargestellten Steuereinheit zur Verfügung stellt. Die Steuereinheit erzeugt Ein- und Ausschaltsignale für die Basislichtquellen 6 und die Zusatzlichtquellen 7′, 7ʺ, 7‴. Der Neigungssensor ist vorzugsweise über elektrische Kabel mit der Steuereinheit verbunden. Die Steuereinheit ist vorzugsweise über elektrische Kabel mit den Basislichtquellen 6 bzw. Zusatzlichtquellen 7′, 7ʺ, 7‴ verbunden.

Erfolgt während der Fahrt ein Bremsvorgang des Motorrades, führt dies zu einer Neigungsverstellung des Scheinwerfers 1 um eine quer zu einer Hauptabstrahlrichtung H des Scheinwerfers 1 verlaufenden horizontalen Achse A. Dieser Vorgang kann auch als Nicken bezeichnet werden, wobei die Achse A eine Nickachse darstellt. Gegebenenfalls kann das Nicken des Scheinwerfers 1 auch teilweise oder ausschließlich durch eine Längsverschiebung des Scheinwerfers 1 entlang einer Erstreckung der Gabeleinrichtung 2 erfolgen.

In Abhängigkeit von der Größe der Neigungsverstellung werden sequenziell die Zusatzlichtquellen 7′, 7ʺ, 7‴ zugeschaltet. Je größer die Neigungsverstellung des Abblendlichtmoduls bezogen auf die Normallage ist, desto mehr Zusatzlichtquellen 7′, 7ʺ, 7‴ werden eingeschaltet.

Wird der Scheinwerfer 1 durch einen Bremsvorgang von der Normallage in eine erste Nichtnormallage verbracht, in der mittels des Neigungssensors ein erster Neigungswinkel von beispielsweise 2° festgestellt wird, wird eine erste Zusatzlichtquelle 7' zugeschaltet, so dass mittels der hierdurch erzeugten ersten Zusatzlichtverteilung ein erster Zwischenraum Z1 zwischen der aktuellen Hell-/Dunkelgrenze HGD_{B} der Basislichtverteilung LV_{B} und der Normalposition N (Soll-Hell-/Dunkelgrenze) beleuchtet wird. Die erste Zusatzlichtquelle 7' ist um den Defokussierweg so beabstandet zu dem Fokussierbereich angeordnet, dass bei Erreichen eines ersten Nickwinkels *ϕ*₁ von 2° bezüglich der Ausgangslage (Normallage) sich die Hell-/Dunkelgrenze HDG_{Z1} der ersten Zusatzlichtverteilung und somit einer Gesamtlichtverteilung GLV₁ in der Normalposition N befindet. Die sich hieraus ergebende Gesamtlichtverteilung GLV₁, die sich aus der Basislichtverteilung LV_{B} und der ersten Zusatzlichtverteilung zusammensetzt, weist somit im Vergleich zu der Basislichtverteilung LV_{B} eine erhöhte Hell-/Dunkelgrenze HDG_{Z1} auf, siehe Figuren 5a und 5b.

In Figur 3 ist erkennbar, dass Grenzstrahlen S_{B} der Basislichtquellen 6 zur Erzeugung der Hell-/Dunkelgrenze HDG_{B} führen. Bei Zuschaltung der ersten Zusatzlichtquelle 7' ergibt sich ein Grenzstrahl S_{Z1}, der die Hell-/Dunkelgrenze HDG_{Z1} bewirkt, so dass in der ersten Nichtnormallage eine gleichgroße Leuchtweite gegeben ist wie in der Normallage des Scheinwerfers 1.

Wird der Scheinwerfer 1 durch einen stärkeren Bremsvorgang von der Normallage über die erste Nichtnormallage in eine zweite Nichtnormallage verbracht, in der der Scheinwerfer 1 um einen zweiten Neigungswinkel *ϕ*₂ in Höhe von 4° bezogen zur Normallage verstellt wird, wird zusätzlich zu der ersten Zusatzlichtquelle 7' eine zweite Zusatzlichtquelle 7" eingeschaltet. Diese Zusatzlichtquelle 7" ist um den Defokussierweg beabstandet zu der ersten Zusatzlichtquelle 7', und zwar auf einer zu der Basislichtquelle 6 abewandten Seite der ersten Zusatzlichtquelle 7' angeordnet. Da der Defokussierweg, also der Abstand der zweiten Zusatzlichtquelle 7" zu der ersten Zusatzlichtquelle 7' gleich ist wie der Abstand zwischen der ersten Zusatzlichtquelle 7' zu der Basislichtquelle 6, ist ein Grenzstrahl S_{Z2} der zweiten Zusuatzlichtverteilung um den gleichen Differenzwinkel versetzt zu dem Grenzstrahl S_{Z1} der ersten Zusatzlichtverteilung angeordnet wie der Grenzstrahl S_{Z1} der ersten Zusatzlichtverteilung zu dem oberen Grenzstrahl S_{B} der Basislichtverteilung.

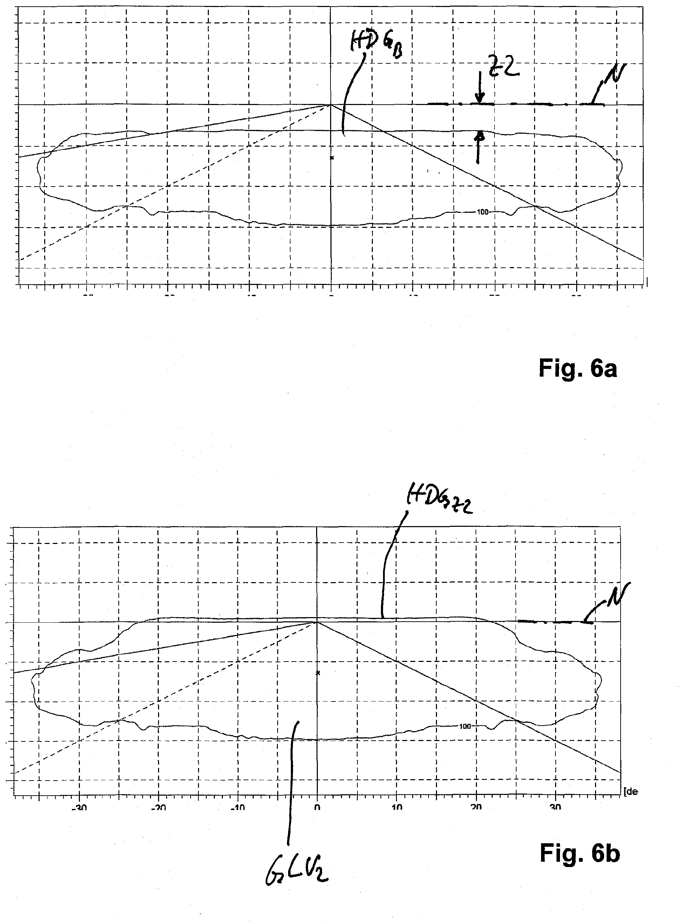

In der zweiten Nichtnormallage des Scheinwerfers 1 wird somit ein zweiter Zwischenraum Z2 zwischen der Hell-/Dunkelgrenze HDG_{B} der Basislichtverteilung LV_{B} und der Normalposition N beleuchtet. Durch Überlagerung der Basislichtverteilung LV_{B}, der ersten Zusatzlichtverteilung und der zweiten Zusatzlichtverteilung ergibt sich eine zweite Gesamtlichtverteilung GLV₂, die eine Hell-/Dunkelgrenze HDG_{Z2} aufweist, welche mit der Normallage N übereinstimmt, siehe Figur 6a und 6b. Bei Erreichen des zweiten Neigungswinkels *ϕ*₂ (4° zur Normallage) verläuft die Hell-/Dunkelgrenze HDG_{Z2} der Gesamtlichtverteilung GLV₂ in der gleichen Höhe wie die Hell-/Dunkelgrenze HDG_{B} der Basislichtverteilung LV_{B} in der Normallage.

Wird das Motorrad noch stärker abgebremst, bei dem der Scheinwerfer 1 so weit geneigt wird, dass ein dritter Neigungswinkel *ϕ*₃ in Höhe von 6° bezogen auf die Normallage eingenommen wird, wird eine dritte Zusatzlichtquelle 7‴ hinzugeschaltet, so dass in einer dritten Nichtnormallage ein Zwischenraum Z3 zwischen der Hell-/Dunkelgrenze HDG_{B} der Basislichtverteilung LV_{B} und der Normalposition N vollständig ausgeleuchet wird. Eine Gesamtlichtverteilung GLV₃ in der dritten Nichtnormallage setzt sich aus der Basislichtverteilung, der ersten Zusatzlichtverteilung, der zweiten Zusatzlichtverteilung und der dritten Zusatzlichtverteilung zusammen und weist eine Hell-/Dunkelgrenze HDG_{Z3} auf, die mit der Normalposition N übereinstimmt. In Figur 3 ist die Hell-/Dunkelgrenze HDG_{Z3} erzeugende Grenzstrahlen S_{Z3} eingezeichnet.

Es wird somit durch ein stufenweises Zuschalten von einer Anzahl von Zusatzlichtquellen 7′, 7ʺ, 7‴ eine sequenzielle Erhöhung der Leuchtweite bzw. Erhöhung der Hell-/Dunkelgrenze HDG bewirkt, wobei in den Schaltstufen die aktuelle Hell-/Dunkelgrenze HDG_{Z1}, HDG_{Z2}, HDG_{Z3} mit der vorgegebenen Normalposition N übereinstimmt. Je größer die Anzahl der Zusatzlichtquellen 7 ist, desto feiner kann die Abstufung erfolgen. Im vorliegenden Ausführungsbeispiel liegen die Differenzneigungswinkel, also die Differenz zwischen dem dritten Neigungswinkel *ϕ*₃ und dem zweiten Neigungswinkel *ϕ*₂ bzw. zwischen dem zweiten Neigungswinkel *ϕ*₂ und dem ersten Neigungswinkel *ϕ*₁ bei 2°, d. h. mit jeder Stufe von 2° Neigungswinkeländerung bzw. Nickwinkeländerung erfolgt ein Zuschalten einer weiteren Zusatzlichtquelle 7′, 7ʺ, 7‴.

Alternativ kann der Differenzneigungswinkel auch kleiner sein, was zur Folge hat, dass die Anzahl der Stufen bzw. der Anzahl der Zusatzlichtquellen zunehmen muss.

Nach einer Ausführungsform muss der Differenzneigungswinkel nicht konstant sein. Er kann beispielsweise auch mit größerem Neigungswinkel abnehmen.

Mit Erhöhung der Anzahl der Zusatzlichtquellen bzw. Verkleinerung der Differenzneigungswinkel kann der Neigungsausgleich feiner und homogener erfolgen.

Vorzugsweise ist die Größe der Neigungswinkel *ϕ*₁, *ϕ*₂, *ϕ*₃ bzw. die Größe der Differenzneigungswinkel abhängig von einer Dimension des Lichtführungsmittels 8 und/oder einer Dimension der Zusatzlichtquellen 7, 7′, 7ʺ, 7‴.

## Patentansprüche

1. Scheinwerfer für Fahrzeuge, insbesondere für Zweiradfahrzeuge, mit
einem Abblendlicht-Leuchtmodul (4) enthaltend eine Basislichtquelle (6) und einer Optikeinheit (8) zum Erzeugen einer Abblendlichtverteilung mit einer Hell-/Dunkelgrenze, mit Ausgleichsmitteln zum Ausgleich einer Neigungsverstellung des Scheinwerfers (1) bezüglich einer quer zu einer Hauptabstrahlrichtung (H) des Scheinwerfers (1) verlaufenden horizontalen Achse (A) von einer Normallage, in der sich das Fahrzeug in einem nicht gebremsten Zustand befindet, in eine Nichtnormallage, so dass die Hell-/Dunkelgrenze der Abblendlichtverteilung in der Nichtnormallage des Abblendlicht-Leuchtmoduls (4) in der gleichen Höhe verläuft wie eine Hell-/Dunkelgrenze der Abblendlichtverteilung in der Normallage, wobei als Ausgleichsmittel mindestens eine Zusatzlichtquelle (7′, 7ʺ, 7‴) vorgesehen ist, die in der Nichtnormallage des Abblendlicht-Leuchtmoduls (4) zumindest einer die Basislichtverteilung LV_{B}) erzeugenden Basislichtquelle (6) zuschaltbar ist, wobei der Zusatzlichtquelle (7′, 7ʺ, 7‴) optische Lichtführungsmittel (8) zugeordnet sind zur Erzeugung einer Zusatzlichtverteilung mit einer Zusatz-Hell-/Dunkelgrenze (HDG_{Z1}, HDG_{Z2}, HDG_{Z3}), die um einen Differenzneigungswinkel höher bezüglich der horizontalen Achse (A) verläuft als eine Basis-Hell-/Dunkelgrenze (HDG_{B}) der Basislichtverteilung LV_{B}) in derselben Nichtnormallage und die in der gleichen Höhe verläuft wie die Basis-Hell-/Dunkelgrenze (HDG_{B}) in der Normallage des Abblendlicht-Leuchtmoduls (4), wobei der Scheinwerfer drei Zusatzlichtquellen (7′, 7ʺ, 7‴) umfasst, wobei die Zusatzlichtquellen (7′, 7ʺ, 7‴) zusammen mit der Basislichtquelle (6) relativ zu einem gemeinsamen Reflektor (8) als Optikeinheit positioniert sind, wobei die Basislichtquelle (6) und die Zusatzlichtquellen (7′, 7ʺ, 7‴) in einer gemeinsamen Ebene (E) verlaufen und demselben Reflektor (8) zugeordnet sind, dass die Basislichtquelle (6) in einem Fokussierbereich des Reflektors (8) und die Zusatzlichtquellen (7′, 7ʺ, 7‴) jeweils in Hauptabstrahlrichtung (H) um einen Defokussierweg versetzt zu der Basislichtquelle (6) in einem Defokussierbereich des Reflektors (8) angeordnet sind,
- dass die mehreren Zusatzlichtquellen (7′, 7ʺ, 7‴) in Abhängigkeit von einer mit einem Neigungssensor detektierten aktuellen Neigungsstellung des Abblendlicht-Leuchtmoduls (4) sequenziell zuschaltbar sind, wobei die Zusatzlichtquellen (7′, 7ʺ, 7‴) in Verbindung mit den denselben zugeordneten optischen Lichtführungsmitteln (8) jeweils Zusatzlichtverteilungen mit mehreren in unterschiedlicher Höhe verlaufenden Zusatz-Hell-/Dunkelgrenzen (HDG_{Z1}, HDG_{Z2}, HDG_{Z3}) erzeugen, derart, dass mit Erreichen unterschiedlicher Differenzneigungsstellungen des Abblendlicht-Leuchtmoduls (4) eine der Zusatzlichtverteilung erzeugbar ist, die die Zusatz-Hell-/Dunkelgrenze (HDG_{Z1}, HDG_{Z2}, HDG_{Z3}) in der Höhe aufweist, die der Basis-Hell-/Dunkelgrenze (HDG_{B}) in der Normallage des Abblendlicht-Leuchtmoduls (4) entspricht,
**dadurch gekennzeichnet, dass** die erste Zusatzlichtquelle (7') um einen ersten Defokussierweg, die zweite Zusatzlichtquelle (7") um einen relativ zu dem ersten Defokussierweg größeren zweiten Defokussierweg und die dritte Zusatzlichtquelle (7‴) um einen relativ zu dem ersten und dem zweiten Defokussierweg größeren dritten Defokussierweg versetzt zu der Basislichtquelle (6) angeordnet sind.

## Claims

1. A headlamp for vehicles, in particular for two-wheel vehicles, having a low beam lighting module (4) containing a base light source (6) and an optical unit (8) for generating a low beam distribution with a cut-off line, having compensating means for compensating an incline adjustment of the headlamp (1) relative to a horizontal axis (A) running perpendicularly to a main irradiation direction (H) of the headlamp (1) from a normal position in which the vehicle is in a non-braked state to a non-normal position, such that the cut-off line of the low beam distribution in the non-normal position of the low beam lighting module (4) runs at the same height as a cut-off line of the low beam distribution in the normal position,
wherein at least one additional light source (7′, 7ʺ,7‴) is provided as the compensating means, which additional light source is connectable to at least one base light source (6) generating the base light distribution LV_{B}) in the non-normal position of the low beam lighting module (4), wherein optical light guide means (8) are associated with the additional light source (7′, 7ʺ, 7‴) for generating an additional light distribution with an additional cut-off line (HDG_{Z1}, HDG_{Z2}, HDG_{Z3}) which, relative to the horizontal axis (A), runs higher than a base cut-off line (HDG_{B}) of the base light distribution LV_{B}) by a differential incline angle in the same non-normal position and which runs at the same height as the base cut-off line (HDG_{B}) in the normal position of the low beam lighting module (4), wherein the headlamp comprises three additional light sources (7′, 7ʺ,7‴), wherein the additional light sources (7′, 7ʺ,7‴) are positioned together with the base light source (6) as an optical unit relative to a common reflector (8), wherein the base light source (6) and the additional light source (7′, 7ʺ,7‴) run in a common plane (E) and are associated with the same reflector (8), wherein the base light source (6), in a focus region of the reflector (8), and the additional light sources (7′, 7ʺ,7‴), in the main irradiation direction (H) in each case, are arranged offset from the base light source (6) by a defocusing path in a defocusing region of the reflector (8),
- wherein the several additional light sources (7′, 7ʺ, 7‴) are sequentially connectable depending on a current incline position of the low beam lighting module (4) detected with an incline sensor, wherein the additional light sources (7′, 7ʺ, 7‴), together with the optical light guide means (8) associated with the same, each generate additional light distributions with several additional cut-off lines (HDG_{Z1} HDG_{Z2}, HDG_{Z3}) running at different heights, such that, as different differential incline positions of the low beam lighting module (4) are reached, one of the additional light distributions is generatable which has the additional cut-off line (HDG_{Z1}, HDG_{Z2}, HDG_{Z3}) at the height which corresponds to the base cut-off line (HDG_{B}) in the normal position of the low beam lighting module (4),
**characterized in that**, relative to the base light source (6), the first additional light source (7′) is arranged offset by a first defocusing path, the second additional light source (7ʺ) is arranged offset by a second defocusing path larger than the first defocusing path, and the third additional light source (7‴) is arranged offset by a third defocusing path larger than the first and second defocusing paths.

## Revendications

1. Phare pour véhicules, en particulier pour véhicules à deux roues, avec un module d'éclairage de feu de croisement (4) comprenant une source de lumière de base (6) et une unité optique (8) pour la production d'une distribution de feu de croisement avec une ligne de coupure, avec des moyens de compensation pour la compensation d'un réglage d'inclinaison du phare (1) relativement à un axe horizontal (A) s'étendant transversalement par rapport à une direction de projection principale (H) du phare (1) d'une position normale, dans laquelle le véhicule se trouve dans un état non freiné, à une position non normale, de telle sorte que la ligne de coupure de la distribution de feu de croisement dans la position non normale du module d'éclairage de feu de croisement (4) s'étend à la même hauteur qu'une ligne de coupure de la distribution de feu de croisement dans la position normale,
au moins une source de lumière supplémentaire (7′, 7ʺ, 7‴) étant prévue comme moyen de compensation, laquelle est connectable à au moins une source de lumière de base (6) générant la distribution d'éclairage de base LV_{B}) dans la position non normale du module d'éclairage de feu de croisement (4), des moyens de guidage de lumière (8) optiques étant attribués à la source de lumière supplémentaire (7′, 7ʺ, 7‴) pour la génération d'une distribution de lumière supplémentaire avec une ligne de coupure supplémentaire (HDG_{Z1}, HDG_{Z2}, HDG_{Z3}), laquelle s'étend plus haut qu'une ligne de coupure de base (HDG_{B}) de la distribution d'éclairage de base LV_{B}) dans la même position non normale, selon un angle d'inclinaison différentiel sur l'axe horizontal (A), et à la même hauteur que la ligne de coupure de base (HDG_{B}) dans la position normale du module d'éclairage de feu de croisement (4), le phare comprenant trois sources de lumière supplémentaires (7′, 7ʺ, 7‴), les sources de lumière supplémentaires (7′, 7ʺ, 7‴) étant positionnées conjointement avec la source de lumière de base (6) comme unité optique relativement à un réflecteur (8) commun, la source de lumière de base (6) et les sources de lumière supplémentaires (7′, 7ʺ, 7‴) s'étendant dans un plan commun (E) et étant attribuées au même réflecteur (8), la source de lumière de base (6), dans une plage de focalisation du réflecteur (8), et les sources de lumière supplémentaire (7′, 7ʺ, 7‴), dans la direction de projection principale (H) respectivement, étant disposées de façon décalée selon un chemin de défocalisation par rapport à la source de lumière de base (6) dans une plage de défocalisation du réflecteur (8),
- les plusieurs sources de lumière supplémentaires (7′, 7ʺ, 7‴) étant connectables de façon séquentielle en fonction d'une position d'inclinaison du module d'éclairage de feu de croisement (4) actuelle détectée avec un capteur d'inclinaison, les sources de lumière supplémentaires (7′, 7ʺ, 7‴), en association avec les moyens de guidage de lumière optiques (8) attribués à celles-ci, générant respectivement des distributions de lumière supplémentaires avec plusieurs lignes de coupure supplémentaires (HDG_{Z1} HDG_{Z2}, HDG_{Z3}) s'étendant à différentes hauteurs, de telle sorte qu'une distribution de lumière supplémentaire peut être générée en atteignant différentes positions d'inclinaison différentielle du module d'éclairage de feu de croisement (4), laquelle présente la ligne de coupure (HDG_{Z1} HDG_{Z2}, HDG_{Z3}) à la hauteur correspondant à la ligne de coupure de base (HDG_{B}) dans la position normale du module d'éclairage de feu de croisement (4),
**caractérisé en ce que**, par rapport à la source de lumière de base (6), la première source de lumière supplémentaire (7') est disposée de façon décalée selon un premier chemin de défocalisation, la deuxième source de lumière supplémentaire (7") est disposée de façon décalée selon un deuxième chemin de défocalisation plus important relativement au premier chemin de défocalisation et la troisième source de lumière supplémentaire (7‴) est disposée de façon décalée selon un troisième chemin de défocalisation plus important que les premier et deuxième chemins de défocalisation.
